# EUROPEAN PATENT APPLICATION

(11) **EP 2 031 926 A1**
(43) Date of publication of application: **04.03.2009**
(21) Application number: 07301306.2
(22) Date of filing: 13.08.2007
(51) Int. Cl.: H04W 48/12

(54) **A method for constructing a network access identifier**

(71) Applicant: Alcatel Lucent, 75008 Paris (FR)
(72) Inventor: Chakri, Al Mahdi, 91300 MASSY (FR); De Juan Huarte, Federico, 75014 PARIS (FR)
(74) Representative: El Manouni, Josiane

(57) **Abstract**

One object of the present invention is a method for constructing a Network Access Identifier NAI for access by a Mobile Station MS to services provided by a Network Service Provider NSP, said method comprising a step of:
- MS constructing a NAI whose realm portion comprises a NSP Identifier NSP-ID.

## Description

The present invention generally relates to mobile communication networks and systems.

Detailed descriptions of mobile communication networks and systems can be found in the litterature, in particular in Technical Specifications published by standardisation bodies.

An example of mobile communication network and system, to which the present invention particularly (but not exclusively) applies, uses WiMAX technology. A description of WiMAX technology can be found in particular in IEEE 802.16e and WiMAX Forum standards.

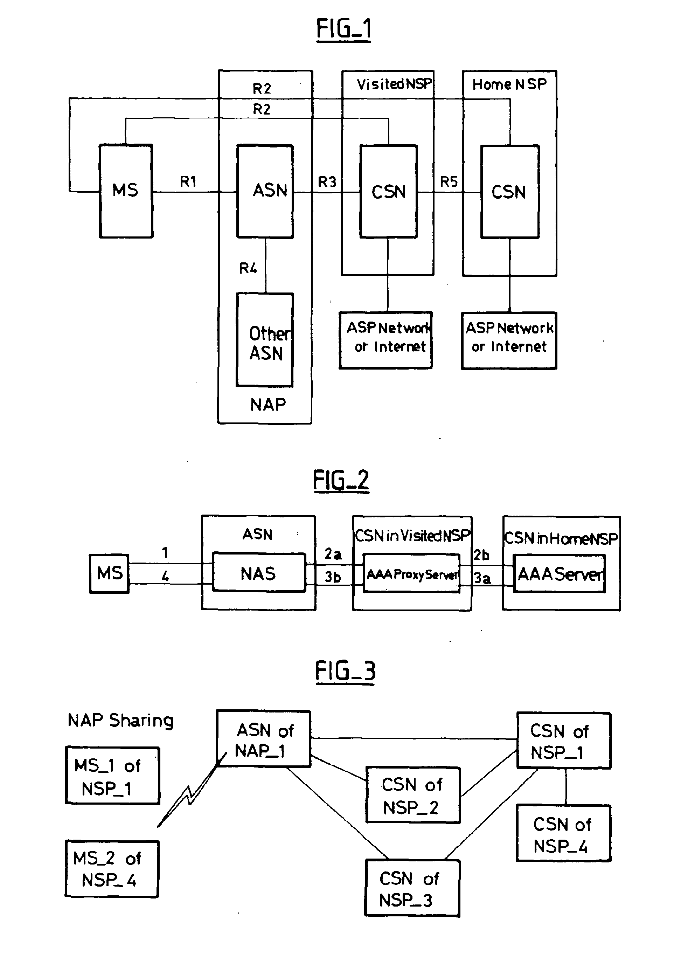

The WiMAX network reference model is recalled in figure 1 taken back from Technical Specification "WiMAX End-to-End Network Systems Architecture" Stage 2 published by WiMAX Forum.

A Mobile Station MS has access to a Connectivity Service Network CSN via an Access Service Network ASN. ASN is deployed by an Access Service Provider ASP. ASN is defined as a set of network functions needed to provide radio access to a WiMAX subscriber. CSN is deployed by a Network Service Provider NSP. CSN is defined as a set of network functions enabling IP connectivity and WiMAX services to WiMAX subscribers. To provide these services, an NSP establishes agreements with one or more NAPs. Additionally an NSP may also establish roaming agreements with other NSPs.

Network discovery and selection/re-selection procedures performed in such systems include NAP discovery, NSP discovery, NSP Selection, and ASN attachment procedures. The requirement is to enable a MS to discover all accessible NSPs, and to indicate its NSP selection during connectivity to an ASN associated with the selected NSP. The actual NSP selection mechanism employed by the MS may be based on various preference criteria, possibly dependent on the presence of configuration information in the MS.

NAP discovery refers to a process wherein a MS discovers available NAP(s) in a detected wireless coverage area.

NSP discovery refers to a process wherein a MS discovers available NSP(s) in a coverage area. In NSP discovery, an NSP identifier can be presented to the MS as a unique 24-bit NSP identifier NSP-ID as specified by IEEE 802.16e. The value of the 24-bit NSP-ID is issued by a namespace authority to guarantee global uniqueness.

NSP Selection refers to a process of choosing a most preferred NSP and a candidate set of ASNs to attach, based on the dynamic information obtained during the discovery phase and stored configuration information.

ASN attachment based on NSP Selection refers to a process wherein the MS indicates its selection during registration at ASN associated with the selected NSP by providing its identity in the form of Network Access Identifier NAI.

Network access authentication procedures peformed in such systems are based on EAP (Extensible Authentication Protocol). NAI is used as identifier within EAP-based user and MS network access authentication. Between a AAA Server in the CSN of the Home NSP and an Authenticator (or Network Access Server NAS) in the ASN, EAP runs over RADIUS protocol. The ASN uses the realm portion of the NAI (as defined in RFC 4282) to determine the next AAA (Authentication Authorization Accounting) hop to where the MS's AAA packets should be routed. The MS may use its NAI with additional information (also known as decorated NAI) to influence the routing choice of the next AAA hop when the home NSP realm is only reachable via another mediating realm (e.g., a visited NSP in a roaming scenario).

As specified by RFC 4282, NAIs are used, among other purposes, for routing AAA transactions to the user's home realm. Usually, the home realm appears in the realm portion of the NAI, but in some cases a different realm can be used. This may be useful, for instance, when the home realm is reachable only via another mediating realm. NAI realm names are required to be unique, and the rights to use a given NAI realm for roaming purposes are obtained coincident with acquiring the rights to use a particular Fully Qualified Domain Name (FQDN).

Figure 2, taken back from the above-mentioned Technical Specification recalls the WiMAX roaming reference model. The AAA client on the Authenticator in the ASN encapsulates the EAP in AAA protocol packets and forwards them via one or more AAA proxies to the AAA Server in the CSN of the home NSP, which holds the subscription with the Supplicant (MS). In roaming scenarios, one or more AAA brokers with AAA proxies may exist between Authenticator and AAA Server.

In EAP the Outer-Identity refers to the NAI delivered by the EAP-Peer in the EAP-Identity Response. This is when the MS responds to the EAP Request Identity message sent by the Authenticator. The Outer Identity is used to populate the UserName attribute of the RADIUS Accept-Request message. The AAA infrastructure routes the AAA packets according to the information contained in this attribute.

In such context, the present invention recognizes in particular the following problems.

Currently, according to the Technical Specification "WIMAX End-to-End Network Systems Architecture" Stage 3 published by WIMAX Forum, the MS shall format the NAI used as an outer identity during EAP exchanges as follows:
[Routing Realm1!RoutingRealm2!...!]{WiMAX-decoration}username@realm where:
RoutingRealm: Is optional. The use of routing realm is described in RFC 4282.
{WiMAX-decoration}: Must be used to indicate to the EAP Authentication Server which authentication mode is being requested by the MS. The WiMAX decoration consists of one or more attribute value pairs (avp) separated by the '|" enclosed with curly braces.
"{"avp1"|"avp2 ...."}"
where an avp is formatted as: name"="value with no spaces before and immediately after the "=".

The character set used for name and value must be consistent with the character set specified by RFC4282. The name must be alphanumeric with no spaces.

Username: The user name is as defined by the EAP method with the following caveate. With the exception of NAP authentication,, it is a WiMAX requirement that the username shall uniquely identify the user in the home realm. In some cases, where the username in the outer identity is not required by the EAP method, the MS shall generate a pseudo-identity to be used as the username in the outer identity.

Realm: Is as specified by RFC 4282.

For example, as illustrated in figure 3 taken back from Technical Specification "WiMAX End-to-End Network Systems Architecture" Stage 2 published by WiMAX Forum, for attaching to NSP_1, MS_1 uses a normal/root NAI (i.e. username @ NSP_1.com) as the packets can be directly routed to the AAA server in NSP_1, whereas, for attaching to NSP_4, MS_2 needs to construct a decorated NAI (e.g., NSP_4!user-name @ NSP_1.com) as the packets cannot directly be routed to the home NSP (i.e. NSP_4).

In other words, currently, in WiMAX networks, roamers have to construct a decorated NAI with the realm of the visited network (V-NSP) in order that AAA messages are routed to their Home network (H-NSP) through the visited network.

Still in other words, currently, 24-bit NSP identities received in the NSP Access discovery phase have to be mapped by MS into realms of corresponding NSPs.

As recognized by the present invention, there is a need to improve such current techniques of NAI (particularly decorated NAI) construction.

Indeed, such techniques require that the MS, either has a pre-stored mapping list between the 24-bit NSP ID broadcasted by the BSs and the realms (first solution), or asks the network to provide the NSP realm using 802.16 messages (second solution).

First solution in particular has as drawback that such mapping list has to be updated according to network reconfiguration or roaming agreement establshment, of which the MS is generally not aware.

Second solution in particular has as drawback that it increases the access time and is not efficient from radio bandwidth consumption point of view.

It is an object of the present invention to solve part or all of such problems, or avoid part or all of such drawbacks.

These and other objects are achieved, in one aspect of the present invention, by a method for constructing a Network Access Identifier NAI for access by a Mobile Station MS to services provided by a Network Service Provider NSP, said method comprising a step of:
- MS constructing a NAI whose realm portion comprises a NSP identifier NSP-ID.

In an embodiment, said method further comprises the steps of:
- upon reception from a MS of an NAI whose realm portion comprises an NSP-ID, an Access Service Network ASN entity mapping said NSP-ID to a NSP realm,
- said ASN entity constructing a NAI whose realm portion comprises NSP realm obtained by said mapping.

In an embodiment, said NSP-ID is a 24-bit NSP-ID as specified by IEEE 802.16e.

In an embodiment, said method comprises a step of:
- a MS obtaining NSP-IDs by performing NSP discovery procedure.

In an embodiment, NSP corresponds to a Visited NSP V-NSP, and NAI corresponds to a decorated NAI.

In an embodiment, said ASN entity corresponds to an Access Network Server ANS.

In an embodiment, said method comprises a step of:
- a MS sending its constructed NAI to an ASN entity in a message EAP Identity Response.

In an embodiment, said method comprises a step of:
- an ASN entity sending its constructed NAI to an AAA Proxy/Server in a message AAA Access Request.

These and other objects are achieved, in another aspect of the present invention, by a Mobile Station MS comprising means for constructing a Network Access Identifier NAI for access by said Mobile Station MS to services provided by a Network Service Provider NSP, said means comprising:
- means for constructing a Network Access Identifier NAI whose realm portion comprises a NSP Identifier NSP-ID.

These and other objects are achieved, in another aspect of the present invention, by a Access Service Network ASN entity, in particular Network Access Server NAS, comprising:
- means for, upon reception from a Mobile Station MS of an NAI whose realm portion comprises a NSP Identifier NSP-ID, mapping said NSP-ID to a NSP realm,
- means for constructing an NAI whose realm portion comprises an NSP realm obtained by said mapping.

These and other objects of the present invention will become more apparent from the following description taken in conjunction with the accompanying drawings:
- figure 1 is intended to recall the WiMAX network reference model,
- figure 2 is intended to recall the WiMAX roaming reference model,
- figure 3 is intended to recall the current NAI construction, by way of an example,
- figure 4 is intended to illustrate an example of a method according to the present invention.

The example of WiMAX, and decorated NAI (or NSP corresponding to V-NSP), will more particularly considered in the following. However, the present invention is not limited to such example.

In such example, the present invention may also be explained as follows.

The present invention proposes to use available V-NSP ID to decorate the NAI instead of asking the network to provide the NSP realm or to pre-configure the device with mapping list between V-NSP Id and corresponding realms.

The present invention proposes to use the V-NSP ID that the device gets during network discovery to decorate the NAI instead of decorating the NAI with V-NSP realm. Then the AAA messages can be routed based on the V-NSP ID through the visited network to the home network. Then there is no need to pre-configure the device with a mapping list between the V-NSP ID and the corresponding realms and there is no need either to use 802.16 messages to convey the NSP realms from the network during network discovery and selection.

The present invention proposes to modify the above recalled Technical Specification "WIMAX End-to-End Network Systems Architecture" Stage 3 published by WIMAX Forum, in the following way.

The MS shall format the NAI used as an outer identity during EAP exchanges as follows:
{WiMAX-decoration}username@realm
{WiMAX-decoration}: optionally used to indicate various MS capability/intent. The WiMAX decoration is extensible. The WiMAX decoration consists of one or more attribute value pairs (avp) separated by the '|" enclosed with curly braces.
"{" avp1 "|" avp2 ...."}"
where an avp is formatted as: name"="value with no spaces before and immediately after the "=".

The character set used for name and value must be consistent with the character set specified by RFC4282. The name must be alphanumeric with no spaces.

Username: The user name is as defined by the EAP method with the following caveate. With the exception of NAP authentication,, it is a WiMAX requirement that the username sahll uniquely identify the user in the home realm. In some cases, where the username in the outer identity is not required by the EAP method, the MS shall generate a pseudo-identity to be used as the username in the outer identity.

When roaming the MS decorates the NAI so that the AAA messages can be routed correctly to H-AAA through the V-AAA as follows:
HomeRealm!username@V-NSP-ID
V-NSP-ID: is the NSP-ID of the visited NSP that the user is roaming to.

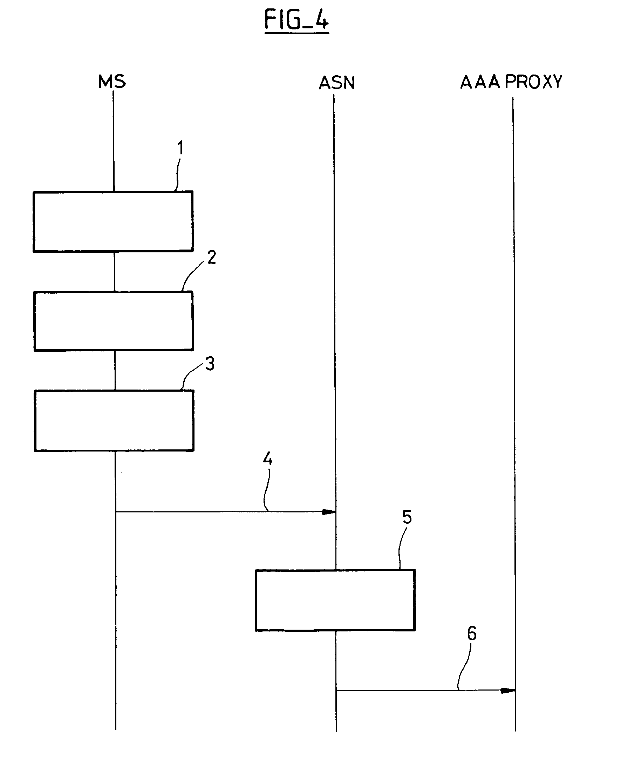

An example of a method according to the present invention is illustrated in figure 4. It comprises the following steps:
- at step 1, MS discovers available NSPs,
- at step 2, MS selects a preferred NSP to attach to,
- at setp 3, MS constructs a NAI whose realm portion comprises NSP-ID (received during step 1) instead of NSP realm,
- at step 4, MS indicates its selection to an ASN entity associated with the selected NSP, in an EAP Identity Response, including the NAI constructed at step 3,
- at step 5, ASN entity maps the received NSP-ID to NSP realm,
- at step 6, AAA Client in the ASN entity sends a AAA Access Request to an AAA Proxy.

Thus, in one aspect, the present invention proposes a method for constructing a Network Access Identifier NAI for access by a Mobile Station MS to services provided by a Network Service Provider NSP, said method comprising a step of:
- MS constructing a NAI whose realm portion comprises a NSP Identifier NSP-ID.

In other aspects, the present invention has for its object different entites of a mobile communication system (in particular Mobile Station, and Network Access Server) for performing a method according to the present invention.

In particular, the present invention also has for its object a Mobile Station, comprising means for constructing a Network Access Identifier NAI for access by said Mobile Station MS to services provided by a Network Service Provider NSP, said means comprising:
- means for constructing a Network Access Identifier NAI whose realm portion comprises a NSP Identifier NSP-ID.

In particular, the present invention also has for its object a Access Service Network ASN entity, in particular Network Access Server NAS, comprising:
- means for, upon reception from a Mobile Station MS of an NAI whose realm portion comprises a NSP Identifier NSP-ID, mapping said NSP-ID to a NSP realm,
- means for constructing an NAI whose realm portion comprises an NSP realm obtained by said mapping.

The detailed implementation of the above-mentioned means does not raise any special problem for a person skilled in the art, and therefore such means do not need to be more fully disclosed than has been made above, by their function, for a person skilled in the art.

## Claims

1. A method for constructing a Network Access Identifier NAI for access by a Mobile Station MS to services provided by a Network Service Provider NSP, said method comprising a step of:
- MS constructing a NAI whose realm portion comprises a NSP Identifier NSP-ID.

2. A method according to claim 1, comprising the steps of:
- upon reception from a MS of an NAI whose realm portion comprises an NSP-ID, an Access Service Network ASN entity mapping said NSP-ID to a NSP realm,
- said ASN entity constructing a NAI whose realm portion comprises NSP realm obtained by said mapping.

3. A method according to claim 1 or 2, wherein said NSP-ID is a 24-bit NSP-ID as specified by IEEE 802.16e.

4. A method according to any of claims 1 to 3, comprising a step of:
- a MS obtaining NSP-IDs by performing NSP discovery procedure.

5. A method according to any of claims 1 to 4, wherein NSP corresponds to a Visited NSP V-NSP, and NAI corresponds to a decorated NAI.

6. A method according to any of claim 2 to 5, wherein ASN entity corresponds to an Access Network Server ANS.

7. A method according to any of claims 1 to 6, comprising a step of:
- a MS sending its constructed NAI to an ASN entity in a message EAP Identity Response.

8. A method according to any of claims 2 to 7, comprising a step of:
- an ASN entity sending its constructed NAI to an AAA Proxy/Server in a message AAA Access Request.

9. A Mobile Station MS, comprising means for constructing a Network Access Identifier NAI for access by said Mobile Station MS to services provided by a Network Service Provider NSP, said means comprising:
- means for constructing a Network Access Identifier NAI whose realm portion comprises a NSP Identifier NSP-ID.

10. A MS according to claim 9, comprising:
- means for obtaining NSP-IDs by performing NSP discovery procedure.

11. A MS according to claim 9 or 10, comprising:
- means for sending its constructed NAI to an ASN entity in a message EAP Identity Response.

12. An Access Service Network ASN entity, comprising:
- means for, upon reception from a Mobile Station MS of an NAI whose realm portion comprises a NSP Identifier NSP-ID, mapping said NSP-ID to a NSP realm,
- means for constructing an NAI whose realm portion comprises an NSP realm obtained by said mapping.

13. An ASN entity according to claim 12, corresponding to an Access Network Server ANS.

14. An ASN entity according to claim 12 or 13, comprising:
- means for sending its constructed NAI to an AAA Proxy/Server in a message AAA Access Request.
